# EUROPÄISCHE PATENTSCHRIFT

(11) **EP 1 536 156 B1**
(45) Veröffentlichungstag und Bekanntmachung des Hinweises auf die Patenterteilung: **18.09.2013**
(21) Anmeldenummer: 04023443.7
(22) Anmeldetag: 01.10.2004
(51) Int. Cl.: F16D 69/02, C04B 35/573

(54) **Reibpaarungen für Feststellbremsen in Kraftfahrzeugen**
Friction coupling for motor vehicle handbrake.
Couple frottant pour le frein à main d'une voiture.

(30) Priorität: 02.10.2003 DE 10346499
(43) Veröffentlichungstag der Anmeldung: 01.06.2005
(73) Patentinhaber: AUDI AG, 85045 Ingolstadt (DE)
(72) Erfinder: Rosenlöcher, Jens, 86153 Augsburg (DE); Krupka, Mario, 86477 Adelsried (DE)
(74) Vertreter: Deckers, Hellmuth Alexander

(56) Entgegenhaltungen:
- EP-A2- 1 450 064
- US-A- 5 007 508
- US-A1- 2001 051 258
- US-A1- 2003 057 040

## Beschreibung

Die vorliegende Erfindung betrifft Reibpaarungen für Feststellbremsen in Kraftfahrzeugen, insbesondere Feststellbremsen, die auf Carbon-Keramik-Bremsscheiben wirken.

Reibpaarungen für Betriebsbremsen werden üblicherweise so gewählt, daß die mit der Scheibe oder der Trommel zusammenwirkenden Beläge weicher sind als das Material der Scheibe oder der Trommel, da sich Bremsbeläge bei Verschleiß leichter und kostengünstiger erneuern lassen als die Scheiben oder Trommeln.

Bei einer Wahl von identischen Materialien für die Reibpaarung von Belägen und Scheiben würden die Bremsscheiben im gleichen Maß wie die Beläge verschleißen, dies ist für Betriebsbremsen aus den oben genannten Gründen nicht erwünscht.

Üblicherweise werden daher in Betriebsbremsen für Bremsbeläge organisch (mit Harzen) gebundene Materialien verwendet, die Fasern und partikelförmige Hartstoffe als Reibmittel enthalten.

Aus dem Dokument US 2001/0 051 258 A1 ist ein faserverstärktes Verbundmaterial bekannt, das Massenanteile von 55 % bis 75 % Kohlenstoff, 1 % bis 10 % Silicium und 10 % bis 50 % Siliciumcarbid enthält. Dieses Material zeichnet sich durch einen kinetischen Reibungskoeffizienten von 0,05 bis 0,6, gemessen gegenüber 10 mm-SUJ-Kugeln, aus. Aus der DE-A 19711830 sind Reibbeläge bekannt, die in Verbindung mit Bremskörpern aus faserverstärkter Keramik einsetzbar sind und die durch Sintern von Mischungen aus Kohlenstoff- und Metallpartikeln erhältlich sind, die gegebenenfalls zusätzlich Hartstoffpartikel und/oder feste Schmiermittel enthalten. Diese Beläge zeigen zwar in Kombination mit Carbon-Keramik-Bremsscheiben gegenüber den herkömmlichen organisch gebundenen Belägen einen verringerten Verschleiß, die Haftreibung erscheint aber noch verbesserungsbedürftig. Aus der DE-C 197 27 586 ist ein Bremssystem bekannt mit einer Reibpaarung, wobei sowohl die Bremsscheibe als auch der Bremsbelag aus einer faserverstärkten C/SiC-Verbundkeramik bestehen, und wobei zur Herstellung des Bremsbelags ein C/C-Vorkörper (mit Fasern aus Kohlenstoff verstärkter Körper aus porösem Kohlenstoff) eingesetzt wird; dessen Dichte zumindest im oberflächennahen Bereich höher ist als die des entsprechenden Vorkörpers für die Bremsscheibe. Bei der Silicierung kann daher weniger Silicium eindringen und mit dem Kohlenstoff reagieren, dies führt dazu, daß der Körper für den Bremsbelag nach der Silicierung weniger Siliciumcarbid enthält als der für die Bremsscheibe, und damit weicher als dieser ist. Die Fasern sind bei beiden Körpern im wesentlichen isotrop orientiert.

Im Gegensatz zu Belägen für Bremsen für den Fahrbetrieb (Betriebsbremsen, die dazu bestimmt sind, ein fahrendes Fahrzeug zu verzögern auf eine geringere Geschwindigkeit), die eine ausreichende Abriebfestigkeit und einen hohen Gleitreibungskoeffizienten aufweisen müssen, kommt es bei Belägen für Feststellbremsen ausschließlich auf die Haftreibung an. Insbesondere ist der Abrieb bei einer Feststellbremse kein wesentliches Kriterium, da üblicherweise eine Beanspruchung durch Gleitreibung nicht stattfindet.

Beim Abstellen eines Fahrzeugs mit durch den Betrieb heißen Bremsscheiben unterbleibt selbstverständlich die Kühlung durch die bei Hochleistungsbremsen übliche belüftete Ausführung der Bremsscheiben. Bremsscheibe und Belag der Feststellbremse sind dann in innigem Kontakt durch den Anpreßdruck der Feststellbremse und kühlen nur langsam ab. Es hat sich gezeigt, daß bei derartigen Betriebszuständen die aus dem Stand der Technik in Zusammenhang mit Carbon-Keramik-Bremsscheiben bekannten Beläge stark geschädigt werden und eine zu geringe Haftreibung bei hoher Temperatur besitzen. Die unzureichende Haftreibung zeigt sich auch bereits im kalten Zustand. Da die heißen Körper sich beim Abkühlen zusammenziehen, wird während des Abkühlens auch der Druck der Bremsbeläge auf die Scheibe abnehmen und zum Halten des Fahrzeugs beispielsweise auf Gefällstrecken unzureichend werden. Die aus der DE 197 27 586 bekannten Beläge weisen den Nachteil auf, daß ihre Härte und Temperaturfestigkeit wegen der geringeren Dichte im silicierten Zustand und ihre Wärmeleitfähigkeit noch unzureichend sind für die Verwendung in einer Feststellbremse.

Ein weiterer Nachteil der aus dem Stand der Technik bekannten Beläge für Feststellbremsen ist die Tatsache, daß sich nach längerer Standzeit eines Fahrzeugs insbesondere in feuchter Umgebung durch Korrosion an der Kontaktfläche zwischen Belag und Bremsscheibe eine Verbindungsschicht zwischen Bremsscheibe und Belag der Feststellbremse ausbildet; man spricht davon, daß "die Bremse festkorrodiert". Beim Lösen dieser Verbindung (Werkstattbesuch erforderlich) kann ein Rückstand der Verbindungsschicht auf der Bremsscheibe verbleiben, die dann abgedreht oder ausgetauscht werden muß.

Daher besteht die Aufgabe, Bremsbeläge für Feststellbremsen bereitzustellen, die auch bei hoher Temperatur im Kontakt mit Carbon-Keramik-Bremsscheiben nicht geschädigt werden, und die eine auch im kalten Zustand möglichst hohe Haftreibung in Kombination mit Carbon-Keramik-Bremsscheiben ergeben. Dabei soll das Fahrzeug auch bei Steigungen von 45° und mehr sicher gehalten werden; dies ist mit den oben beschriebenen bekannten Belägen bisher nicht möglich. Eine weitere Aufgabe besteht darin, das Festkorrodieren des Belags auf der Bremsscheibe zu vermeiden, und eine hohe Wärmeleitfähigkeit in dem Belag zu realisieren.

Diese Aufgabe wird gelöst durch Bremsbeläge, deren Material eine faserverstärkte Keramik ist, wobei die Verstärkungsfasern ausgewählt sind aus Kohlenstoffasern, Graphitfasern, Siliciumcarbidfasern, und Whiskern von keramischen Materialien und von Metallen, insbesondere hochschmelzenden Metallen mit einer Schmelztemperatur von über 1400 °C wie Tantal, Wolfram, Molybdän, Niob und Hafnium. Die Matrix der Keramik enthält Phasen aus Siliciumcarbid sowie gegebenenfalls Phasen aus Kohlenstoff und/oder Phasen aus Silicium. Der Massenanteil der Verstärkungsfasern in der faserverstärkten Keramik ist bevorzugt 20 % bis 60 %, besonders bevorzugt 25 % bis 55 %, und insbesondere 30 % bis 50 %. Die Orientierung der Fasern ist dabei so, daß mindestens 50 % der Fasern einen Winkel von höchstens 45° mit der Flächennormale der Reibfläche des Bremsbelags einschließen. Dabei werden bevorzugt Kurzfasern und Kurzfaserbündel eingesetzt, deren mittlere Länge bis zu 30 mm, bevorzugt bis zu 20 mm, und besonders bevorzugt bis zu 10 mm beträgt. Die Fasern können als Bündel in dem Material der Bremsbeläge vorliegen; es ist jedoch auch möglich, die Verstärkungsfasern in Form von Geweben einzusetzen. Dabei ist es bevorzugt, die Gewebelagen so auszurichten, daß die Ebene des Gewebes mit der Flächenormalen des Bremsbelags einen Winkel von höchstens 45° einschließt. Der Massenanteil des Siliciumcarbid beträgt bevorzugt 30 % bis 70 %, besonders bevorzugt 35 % bis 65 %, und insbesondere 40 % bis 60 %. Die faserverstärkte Keramik enthält keine Metallpulver und bevorzugt keine partikelförmigen Hartstoffe oder feste Schmiermittel. Es hat sich nämlich bei den Versuchen, die der vorliegenden Erfindung zugrundelagen, ergeben, daß bei einer erhöhten Temperatur, wie sie nach einer Fahrt unter größerer Bremsbelastung (beispielsweise bei einer Bergabfahrt auf einer Paßstraße, bis 1000 °C) auftreten, und dem zum Halten des Fahrzeugs erforderlichen Anpreßdruck oberflächliche Schädigungen der Carbon-Keramik-Bremsscheibe ergeben, wenn die Beläge für die Feststellbremse Metallpulver enthalten. Überraschenderweise wurde festgestellt, daß beim Kontakt zwischen gleichartigen Materialien bei Bremsscheibe und Feststellbrems-Belag eine derartige Schädigung nicht stattfindet oder zumindest nicht zu einer oberflächlichen Schädigung der Carbon-Keramik-Bremsscheibe führt. Überraschenderweise ergab sich weiterhin, daß ein Festkorrodieren von Belag und Bremsscheibe durch den Einsatz eines erfindungsgemäßen Belags für die Feststellbremse vermieden werden kann. Dieser überraschende und vorteilhafte Effekt stellt sich auch ein in Kombination eines erfindungsgemäßen Belags mit einer herkömmlichen Bremsscheibe aus Grauguß.

Bevorzugt sind die Verstärkungsfasern aus Kohlenstoff, in Form von Kurzfasern (mit einer gewichtmittleren Länge von 10 µm bis 50 mm, bevorzugt bis zu 30 mun), Bündeln von solchen Kurzfasern, die 400 bis 500 000 derartiger Kurzfasern mit im wesentlicher paralleler Ausrichtung enthalten, oder als Gewebe oder andere flächige textile Gebilde wie Gewirke, Vliese und Gestricke.

Die erfindungsgemäßen Beläge für die Feststellbremsen werden bevorzugt auf Stahlplatten befestigt, die auf den Enden der Schenkel der Bremszangen befestigt sind. Die Befestigung erfolgt bevorzugt durch Kleben mit einem hochtemperaturstabilen Kleber, durch Nieten oder durch Löten mit kupferhaltigen Loten. Besonders bevorzugt ist es, den Belag in eine in die Trägerplatte eingefräste Vertiefung oder Tasche einzupassen.

Die erfindungsgemäßen Beläge weisen bevorzugt eine Haftreibungskoeffizienten gegenüber einer Carbon-Keramik-Bremsscheibe von mindestens 0,65 auf, besonders bevorzugt mindestens 0,67, und insbesondere mindestens 0,69. Besonders günstige Werte für die Haftreibung von mindestens 0,70 werden erreicht, wenn die Orientierung der Verstärkungsfasern im Bremsbelag im wesentlichen senkrecht zur Belagsfläche, also im wesentlichen parallel zur Flächennormalen ist. Als "im wesentlichen senkrecht zur Belagsfläche" wird eine Orientierung bezeichnet, bei der mindestens 50 % der Fasern einen Winkel von höchstens 45° mit der Flächennormale einschließen. Der Haftreibungskoeffizient wird umso größer, je höher die Orientierung in Richtung der Flächennormale ist, es ist daher besonders günstig, wenn mindestens 70 % der Fasern einen Winkel von höchstens 45° mit der Flächennormale einschließen, insbesondere höchstens 30°.

Die Herstellung der faserverstärkten keramischen Materialien für die Bremsbeläge kann nach den bekannten Methoden erfolgen, wie sie insbesondere in der DE 197 10 105 beschrieben sind. Es hat sich als besonders günstig erwiesen, wenn eines der folgenden Herstellverfahren angewandt wird:
Im Falle der Verstärkung durch Gewebe werden diese mit einem carbonisierbaren Material, beispielsweise einem Phenolharz, imprägniert, getrocknet, unter Ausschluß von oxydierenden Agentien erhitzt, wobei das carbonisierbare Material im wesentlichen zu Kohlenstoff umgewandelt wird. Dabei werden zur Bildung der Vorkörper mehrere Gewebelagen aufeinander geschichtet und bevorzugt so gestapelt und geschnitten, daß die erwünschte Faserorientierung erreicht wird. Die Ebenen der Gewebelagen liegen daher bevorzugt senkrecht zur Reibfläche des Belags, zumindest bilden sie mit der Flächennormalen auf der Reibfläche des Belags einen Winkel, der nicht mehr als 45° beträgt.

Im Falle der Verstärkung durch Kurzfasern werden Kurzfasern oder Bündel von Kurzfasern mit einem carbonisierbaren Material, beispielsweise einem Phenolharz, vermischt, und das so vorbereitete Material wird bevorzugt extrudiert oder durch Rüttelformen verdichtet. Der Vorteil des Extrudierens ist die dadurch erreichte Orientierung der Verstärkungsfasern in der Extrusionsrichtung. Die Vorkörper für die Beläge werden aus dem Extrudat geschnitten, wobei die Extrusionsrichtung bevorzugt mit der Richtung der Flächennormalen der Beläge übereinstimmt oder höchstens einen Winkel von 45° mit dieser einschließt.

Auch diese Vorkörper werden carbonisiert; die carbonisierten Vorkörper werden in bekannter Weise mit flüssigem Silicium infiltriert, wobei das Silicium mit dem Kohlenstoff des Vorkörpers zu Siliciumcarbid reagiert.

In einer Reibpaarung mit einer Carbon-Keramik-Bremsscheibe wurde die Haftreibung im Zusammenwirken mit den erfindungsgemäßen Bremsbelägen bestimmt, dabei wurden die höchsten Werte mit den extrudierten und senkrecht zur Extrusionsrichtung geschnittenen Belägen (Extrusionsrichtung parallel zur Flächennormale der Reibfläche; Haftreibungskoeffizient µ_{H} von 0,8 bis 1,0) erreicht. Bei den Messungen wurde weiter festgestellt, daß sich auch in Kombination mit Bremsscheiben aus Grauguß Haftreibungskoeffizienten erreichen ließen, die mindestens 0,6 betrugen.

## Patentansprüche

1. Reibpaarungen für Feststellbremsen in Kraftfahrzeugen, umfassend eine Carbon-Keramik-Bremsscheibe und einen Belag für die Bremszange der Feststellbremse, **dadurch gekennzeichnet, daß** der Belag aus einem faserverstärkten Keramik-Verbundwerkstoff besteht, der eine Matrix mit Phasen aus Siliciumcarbid und Verstärkungsfasern aus Kohlenstoff, Graphit, Siliciumcarbid oder Whisker aus hochschmelzenden Metallen mit einer Schmelztemperatur von über 1400 °C aufweist, daß der Haftreibungskoeffizient dieser Reibpaarung mindestens 0,65 beträgt, und daß die Orientierung der Verstärkungsfasern in dem Bremsbelag derart ist, daß mindestens 50 % der Fasern einen Winkel von höchstens 45° mit der Flächennormalen der Reibfläche des Bremsbelags einschließen.

2. Reibpaarung nach Anspruch 1, **dadurch gekennzeichnet, daß** der Massenanteil der Verstärkungsfasern oder Whisker in dem Verbundwerkstoff 20 % bis 60 % beträgt.

3. Reibpaarung nach Anspruch 1, **dadurch gekennzeichnet, daß** der Massenanteil des Siliciumcarbid in dem Verbundwerkstoff 30 % bis 70 % beträgt.

4. Reibpaarung für Feststellbremsen in Kraftfahrzeugen, umfassend eine Bremsscheibe aus Grauguß und einen Belag für die Bremszange der Feststellbremse, **dadurch gekennzeichnet, daß** der Belag aus einem faserverstärkten Keramik-Verbundwerkstoff besteht, der eine Matrix mit Phasen aus Siliciumcarbid und Verstärkungsfasern aus Kohlenstoff, Graphit, Siliciumcarbid oder Whisker aus hochschmelzenden Metallen mit einer Schmelztemperatur von über 1400 °C aufweist, daß der Haftreibungskoeffizient dieser Reibpaarung mindestens 0,60 beträgt und daß mindestens 50 % der Fasern einen Winkel von höchstens 45° mit der Flächennormalen der Reibfläche des Bremsbelags einschließen.

5. Reibpaarung nach Anspruch 4, **dadurch gekennzeichnet, daß** der Massenanteil der Verstärkungsfasern oder Whisker in dem Verbundwerkstoff 20 % bis 60 % beträgt.

6. Reibpaarung nach Anspruch 4, **dadurch gekennzeichnet, daß** der Massenanteil des Siliciumcarbid in dem Verbundwerkstoff 30 % bis 70 % beträgt.

7. Feststellbremse für eine Carbon-Keramik-Bremsscheibe, umfassend eine Bremszange mit mindestens einer Trägerplatte, die einen Belag aus einem faserverstärkten Carbon-Keramik-Werkstoff trägt, **dadurch gekennzeichnet, daß** der Haftreibungskoeffizient dieser Reibpaarung mindestens 0,65 beträgt, und daß die Orientierung der Verstärkungsfasern in dem Bremsbelag derart ist, daß mindestens 50 % der Fasern einen Winkel von höchstens 45° mit der Flächennormalen der Reibfläche des Bremsbelags einschließen.

8. Feststellbremse für eine Bremsscheibe aus Grauguß, umfassend eine Bremszange mit mindestens einer Trägerplatte, die einen Belag aus einem faserverstärkten Carbon-KeramikWerkstoff trägt, **dadurch gekennzeichnet, daß** der Haftreibungskoeffizient dieser Reibpaarung mindestens 0,60 beträgt und daß mindestens 50 % der Fasern einen Winkel von höchstens 45° mit der Flächennormalen der Reibfläche des Bremsbelags einschließen.

9. Feststellbremse nach Anspruch 7 oder 8, **dadurch gekennzeichnet, daß** die Trägerplatte eine Aussparung aufweist, in die der Belag bündig eingepaßt ist.

10. Feststellbremse nach Anspruch 7 oder 8, **dadurch gekennzeichnet, daß** die Orientierung der Fasern in dem Belag derart ist, daß mindestens 70 % der Fasern einen Winkel von höchstens 45° mit der Flächennormale der Reibfläche des Belags einschließen.

## Claims

1. Friction coupling for hand brakes in motor vehicles, comprising a carbon ceramic brake disk and a lining for the brake caliper of the hand brake, **characterised in that** the lining consists of a fibre-reinforced ceramic composite material having a matrix with phases of silicon carbide and reinforcing fibres made of carbon, graphite, silicon carbide or whiskers of refractory metals having a melting temperature of more than 1400 °C, wherein the coefficient of static friction of this friction coupling is at least 0.65, and wherein the orientation of the reinforcing fibres in the brake lining is such that at least 50 % of the fibres enclose an angle of at most 45° with a direction perpendicular to the friction surface of the brake lining.

2. Friction coupling according to claim 1, **characterised in that** the mass fraction of reinforcing fibres or whiskers in the composite material is from 20 % to 60 %.

3. Friction coupling according to claim 1, **characterised in that** the mass fraction of silicon carbide in the composite material is from 30 % to 70 %.

4. Friction coupling for hand brakes in motor vehicles, comprising a grey cast iron brake disk and a lining for the brake caliper for the hand brake, **characterised in that** the lining consists of a fibre-reinforced ceramic composite material having a matrix with phases of silicon carbide and reinforcing fibres made of carbon, graphite, silicon carbide or whiskers of refractory metals having a melting temperature of more than 1400 °C, wherein the coefficient of static friction of this friction coupling is at least 0.60, and that at least 50 % of the fibres enclose an angle of at most 45° with a direction perpendicular to the friction surface of the brake lining.

5. Friction coupling according to claim 4, **characterised in that** the mass fraction of reinforcing fibres or whiskers in the composite material is from 20 % to 60 %.

6. Friction coupling according to claim 4, **characterised in that** the mass fraction of silicon carbide in the composite material is from 30 % to 70 %.

7. Hand brake for a carbon ceramic brake disk comprising a brake caliper having at least one support plate carrying a lining made of a fibre-reinforced ceramic composite material, **characterised in that** the coefficient of static friction of this friction coupling is at least 0.65, and wherein the orientation of the fibres is such that at least 50 % of the fibres enclose an angle of at most 45° with a direction perpendicular to the friction surface of the brake lining.

8. Hand brake for a grey cast iron brake disk comprising a brake caliper having at least one support plate carrying a lining made of a fibre-reinforced ceramic composite material, wherein the coefficient of static friction of this friction coupling is at least 0.60, and wherein at least 50 % of the fibres enclose an angle of at most 45° with a direction perpendicular to the friction surface of the brake lining.

9. Hand brake according to claim 7 or claim 8, **characterised in that** the support plate has a recess in which the lining is flush fitted.

10. Hand brake according to claim 7 or claim 8, **characterised in that** the orientation of the fibres in the lining is such that at least 70 % of the fibres enclose an angle of at most 45° with a direction perpendicular to the friction surface of the brake lining.

## Revendications

1. Couple frottant pour le frein à main d'une voiture présentant un disque de frein en céramique carbone et une fourrure de frein pour l'étrier du frein à main, **caractérisé en ce que** la fourrure de frein contient un matériau composite céramique renforcé par des fibres avec une matrix à phase de carbure de silicium, et des fibres renforçantes en carbone, graphite, carbure de silicium, ou des whiskers de métaux refractaires ayant une température de fusion au-dessus de 1400 °C, que le coefficient de frottement statique est au moins 0.65, et que l'orientation des fibres dans le fourrure de frein est telle que au moins 50 % des fibres forment un angle avec la direction perpendiculaire vis-à-vis la surface de la fourrure de frein non plus que 45°.

2. Couple frottant selon la revendication 1, **caractérisé en ce que** la fraction massique des fibres ou des whiskers dans le matérau composé est de 20 % à 60 %.

3. Couple frottant selon la revendication 1, **caractérisé en ce que** la fraction massique du carbure de silicium dans le matériau composé est de 30 % à 70 %.

4. Couple frottant pour le frein à main d'une voiture présentant un disque de frein moulée en fonte grise et une fourrure de frein **caractérisé en ce que** la fourrure de frein contient un matériau composite céramique renforcé par des fibres avec une matrix à phase de carbure de silicium, et des fibres renforçantes en carbone, graphite, carbure de silicium, ou des whiskers de métaux refractaires ayant une température de fusion au-dessus de 1400 °C, que le coefficient de frottement statique est au moins 0.60, et que au moins 50 % des fibres forment un angle avec la direction perpendiculaire vis-à-vis la surface de la fourrure de frein non plus que 45°.

5. Couple frottant selon la revendication 4, **caractérisé en ce que** la fraction massique des fibres ou des whiskers dans le matériau composé est de 20 % à 60 %.

6. Couple frottant selon la revendication 4, **caractérisé en ce que** la fraction massique du carbure de silicium dans le matériau composé est de 30 % à 70 %.

7. Frein à main pour un disque de frein en céramique carbone présentant un étrier de frein avec au moins une plaque de support portant une fourrure de frein en composé céramique renforcé par des fibres, **caractérisé en ce que** le coefficient de frottement statique est au moins 0.65, et que l'orientation des fibres dans la fourrure de frein est telle que au moins 50 % des fibres forment un angle avec la direction perpendiculaire vis-à-vis la surface de la fourrure de frein non plus que 45°.

8. Frein à main pour un disque de frein moulé en fonte grise présentant un étrier de frein avec au moins une plaque de support portant une fourrure de frein en composé céramique renforcé par des fibres, **caractérisé en ce que** le coefficient de frottement statique est au moins 0.60, et que au moins 50 % des fibres forment un angle avec la direction perpendiculaire vis-à-vis la surface de la fourrure de frein non plus que 45°.

9. Frein à main selon la revendication 7 ou la revendication 8, **caractérisé en ce que** la plaque de support présente un évidement dans lequel la fourrure de frein est affleurée.

10. Frein à main selon la revendication 7 ou la revendication 8, **caractérisé en ce que** l'orientation des fibres dans la fourrure de frein est telle que au moins 70 % des fibres forment un angle avec la direction perpendiculaire vis-à-vis la surface de la fourrure de frein non plus que 45°.
